# EUROPÄISCHE PATENTANMELDUNG

(11) **EP 2 079 239 A2**
(43) Veröffentlichungstag der Anmeldung: **15.07.2009**
(21) Anmeldenummer: 08022226.8
(22) Anmeldetag: 20.12.2008
(51) Int. Cl.: H04N 7/173, H04H 60/66, H04H 60/46

(54) **Dienst für Web Radio und Internetfernsehen**

(30) Priorität: 10.01.2008 DE 102008003914
(71) Anmelder: Deutsche Telekom AG, 53113 Bonn (DE)
(72) Erfinder: Hasemann, Jörg-Michael, 27321 Emtinghausen (DE)

(57) **Zusammenfassung**

Verfahren zum automatischen Aufbau und zur Pflege eines Datenbestandes umfassend einerseits Sendungsdatensätze, die Sendungsinformation zu jeweils einem über ein Datenleitungsnetz, insbesondere das Internet, zu übermittelnden Sendebeitrag enthalten, und umfassend andererseits Konsumentendatensätze, die Konsumenteninformation betreffend jeweils einem über das Datenleitungsnetz erreichbaren Konsumenten enthalten,
wobei Sendungsinformation mittels mindestens einer Analysefunktion aus einem Sendebeitrag automatisch extrahiert, in ein vorgegebenes Format gebracht und in einem dem Sendebeitrag zugeordneten Sendungsdatensatz gespeichert wird, und
wobei ein Konsument identifiziert und die ihm zuzuordnende Konsumenteninformation aus mindestens den medialen Inhalten, die er in der Vergangenheit konsumiert hat, erstellt wird.

## Beschreibung

Die Erfindung betrifft ein Verfahren zum automatischen Aufbau und zur Pflege eines Datenbestandes umfassend einerseits Sendungsdatensätze, die Sendungsinformation zu jeweils einem über ein Datenleitungsnetz, insbesondere das Internet, zu übermittelnden Sendebeitrag enthalten, und umfassend andererseits Konsumentendatensätze, die Nutzerinformation zu jeweils einem über das Datenleitungsnetz erreichbaren Konsumenten enthalten. Die Erfindung betrifft zudem ein Verfahren zur Generierung weiterführender Information, die dem Konsumenten einer Sendung präsentiert wird.

Die erfindungsgemäßen Verfahren betreffen das technische Gebiet der Medienverteilung, bei der eine Nutzeridentifikation, eine Identifizierung der vom Nutzer konsumierten Medien, sowie eine Analyse der Medien möglich ist. Das sind derzeit über das Internet empfangbare Rundfunk- und Fernsehprogramme, in dieser Anmeldung vereinfachend mit Web-Radio und IPTV bezeichnet, auch wenn die Bezeichnung IPTV in Fachkreisen nicht immer ganz einheitlich verwendet wird. Wegen der Zunahme besonders breitbandiger und qualitätssicherer Internetanschlüsse wird Web-Radio und IPTV immer populärer. Dabei liegen die wesentlichen Unterschiede von Web-Radio und IPTV bezüglich der "herkömmlichen" Übertragungstechniken via Antenne und Satellit darin, dass zum einen im Prinzip beliebig viele Programme parallel übertragen werden können. Zum anderen ist ein Rückkanal vorhanden, der eine in das System eingebettete Interaktivität der Nutzer ermöglich, wohingegen die Interaktion der Nutzer bislang nur über externe Medien, wie Telefon oder SMS, möglich war. Zudem bieten Web-Radio und IPTV einfache Möglichkeiten der Authentisierung, der Zugangskontrolle und der Abrechnung von kostenpflichtigen Programmen ("Pay-TV"). Insgesamt sind der Vielfalt möglicher Dienste kaum Grenzen gesetzt.

Bei IPTV oder WebRadio gibt es im Prinzip zwei unterschiedliche Quellen: Zum einen kann sich der Konsument vorproduzierte Inhalte ("Konserven") "on demand" aus dem Netz ziehen. Zum anderen kann er sich in eine "live"-Sendung einschalten, die auch von von einem Streaming-Server geliefert wird.

Aufgabe der vorliegenden Erfindung ist es zunächst, ein Verfahren zu schaffen, mit dem sich Informationen über Sendungen, Formate und Konsumenten beschaffen und zielgerichtet im Hinblick auf die Präsentation weiterführender Information aufzubereiten. Zudem ist es Aufgabe der Erfindung einen Dienst in der Art einer Plattform anzubieten, mit dem sich zielgruppenorientiert Werbung und Information, insbesondere Zusatzinformation, auf einfache Weise über Web-Radio und/oder IPTV verbreiten lässt.

Diese Aufgaben werd durch das Verfahren nach Anspruch 1 und das Verfahren nach Anspruch 9 gelöst. Besonders vorteilhafte Ausführungsformen der Erfindung sind in den Unteransprüchen genannt.

Ein wesentlicher Grundgedanke der Erfindung liegt zunächst in der Erhebung von Daten und in der Erstellung unterschiedlicher Profile, die für die Aufbereitung der Daten und die Vorbereitung der Präsentation genutzt werden. Dabei werden erfindungsgemäß einzelnen Sendungen oder Formate, die aktuell laufen oder abgespeichert sein können, Sendungs-Profile in der Form von Sendungsinformation und einzelnen Konsumenten Nutzer-Profile in der Form von Konsumentendatensätzen zugeordnet. Die Nutzer-Profile werden dann quasi mit den Sendungs-Profilen in Deckung gebracht, wobei aus diesem Abgleich beispielsweise eine Empfehlung für eine Sendung generiert werden kann, die dem Nutzer präsentiert wird. Im Folgenden werden die Begriffe "Nutze" und "Konsument" synonym gebraucht. Beides können Zuschauer und/oder Zuhörer einer audio-visuell dargebotenen Fernsehsendung oder Zuhörer einer Radiosendung sein, wobei die Sendungen insbesondere über das Internet verbreitet werden

Mit der erfindungsgemäßen Vorgehensweise ist es möglich, zielgruppengesteuerte Werbung und/oder Produktpräsentation bei Konsumenten zu platzieren oder Sekundärinformationen zu medialen Inhalten bereitzustellen. Für die Erstellung der Sendungsdatensätzen werden erfindungsgemäß unterschiedliche Informationsquellen genutzt: Zum einen können Informationen aus Programmzeitschriften, aus "Electronic Program Guides" oder ähnlichem genutzt werden. Diese Informationen stehen von vorne herein als Text-Datei oder als XML-Datei zur Verfügung. Zum anderen können sich erhebliche Informationen aus online Analysen der Videodaten und/oder der Audiodaten ergeben. Diese, sich aus den automatischen Analysen ergebenden Informationen, können zur Ergänzung der oben genannten schon als Text-Datei vorliegenden Informationen herangezogen werden.

Die Erstellung eines individuellen Nutzer-Profils oder Konsumentendatensatzes wird vorteilhafterweise zunächst auf der Identifizierung des Konsumenten anhand seiner IP-Adresse erfolgen. Der Konsumentendatensatz wird dann entsprechend des erfindungsgemäßen Verfahrens auf Basis der vom Konsumenten bevorzugten Programme aufgebaut, wobei dabei auch auf Informationen aus den Sendungsprofilen Verwendung finden kann. Beide Arten von Profilen, also die Vielzahl der Sendungs-Profile einerseits und die Nutzer-Profile der einzelnen Zuschauer andererseits, können verwendet werden, um für den Nutzer interessante Sendungen vorzuschlagen, die sowohl abgespeicherte Sendungen ("Video on Demand"), aktuell laufende Sendungen oder in Kürze laufende Sendungen sein können. Der konsumierende Nutzer bekommt somit erfindungsgemäß weitere Vorschläge für sein Programm über das Medium Internet dargeboten. Diese kann er annehmen, indem er beispielsweise auf ein auf dem Bildschirm dargebotenes Banner klickt und über den dahinter verborgenen Link mit der Quelle verbunden wird. Der Nutzer kann somit seinen Konsum über den Rückkanal steuern. Dieser Dienst wird also über eine Funktion ausgewählt und kann dem Nutzer als Ergänzungsangebot aktuell zum gewählten und laufenden Programm dargeboten werden.

Wie dargelegt, besteht das Ergänzungsangebot beispielsweise aus Diensten und Inhalten, insbesondere Begleitinformation, die im Kontext mit der gerade laufenden Sendung stehen. Dabei geht das erfindungsgemäße Verfahren zur Erstellung, Auswahl und Bereitstellung kontextueller Dienste und Inhalte davon aus, dass der Nutzer aktuell ein Format verfolgt, sich hierzu über relevante Begleitinhalte und Begleitdienste informieren möchte.

Zudem kann eine Verknüpfung vom zeitaktuellen Interessenprofil und einem über die Zeit gewachsenen "historischen" Interessenprofil des Nutzers mit Inhalten, wie Empfehlungen zu weiterführenden Informationen, Verweise auf andere Programme, passende Werbeformate, passende Hinweise auf transaktionale Inhalte wie Merchandising/Shopping/elektronisch Dienst, stattfinden.

Sendungsprofile werden erfindungsgemäß online zum Zeitpunkt der Ausstrahlung der Sendung als auch offline erstellt. Wesentliches Merkmal der Erfindung ist dabei zunächst, dass mehrerer Informationsquellen und Informationsarten zur Erstellung von Sendungsprofilen heran gezogen werden: Dafür herhalten können beispielsweise Bildanalysen, Szenenanalysen, Spracherkennung, als Text vorliegende Informationen, Sprechererkennung. In einem weiteren Schritt werden die Informationen abstrahiert und in textuelle Informationen in Form einer insbesondere normierten Datenstuktur, dem sogenannten "I-Set", gebracht. Diese Information wird dann anhand regelbasierter Systeme in einem weiteren Schritt der Aggregation zu Sendungs-Profilen verdichtet. Das Erstellen der Sendungs-Profilen geschieht dabei zeitlich sukzessive anhand vorgegebener Regeln.

Auf der anderen Seite werden auf der Basis von Information über das Konsumverhalten des Nutzers Nutzer-Profile erstellt. Dabei können persönliche Daten aus einer Reihe von Quellen zusammengetragen werden, wobei auch, wie oben sagt, auch die Profile konsumierter Sendungen als Quelle dienen können. Auch im Falle der Nutzer-Profile findet über die Zeit ein regelbasiertes Verfeinern statt, indem ständig neuere Sendungs-Profile zur Modifikation der Nutzer -Profile berücksichtigt werden. Somit passen sich die Nutzer-Profile "intelligent" an ein sich änderndes Nutzungsverhalten an. Erfindungsgemäß findet dann ein regelbasierter Abgleich ("Matchen") der beiden Arten von Profilen statt. Aufgrund des Abgleichs wird ein auf den durch sein Profil gekennzeichneten Nutzer angepasstes Angebot erstellt. Es würden also Informationen vorgeschlagen, die entweder auf das Profil der Sendung, das Profil des Nutzers oder auf beides passen.

Die Vorteile der Erfindung liegen in der automatischen online Identifikation, Selektion und Präsentation nutzerrelevanter Inhalte auf der Basis der Analyse eines aktuellen und historischen Konsumverhaltens sowie anderer nutzerspezifischer Quellen. Die Erfindung ergibt einen Mehrwert für den Kunden allein dadurch, dass ihm spezifisch und aktuell zum laufenden Programm Angebote gemacht werden. Die Erfindung bringt dem Nutzer einen hohen Erlebniswert. Sie ermöglicht zudem eine zielgruppenspezifische Platzierung von Werbung und transaktionalen Inhalten und Diensten. Durch den aktuellen Bezug zum Programm kann der Nutzer beispielsweise zu Spontankäufen animiert werden. Dabei besteht keine Abhängigkeit von Dritten bezüglich elektronischer Informationen zu Programminhalten. Diese Informationen können allein durch Video und Audio-Analysen erschlossen werden. Zusätzliche Informationen sind hilfreich aber nicht erforderlich. Generell von Vorteil ist die Aufwertung von Web

Radio und IPTV als "Mehrwert-Sendung" gegenüber der "unidirektionalen"-Antennensendung.

Nachfolgend werden die einzelnen Schritte des Verfahrens einzeln in besonderen Ausführungsformen beschrieben:

### Schritt 1: "Raw Information Extraction"

Erfindungsgemäß wird aus laufenden Programmen in einer Online-Extraktion beispielsweise durch Analysen des Audio- und Videoinhaltes, "Rohinformation" extrahiert. Diese Rohinformation wird mit anderen benutzerbezogenen und gewissermaßen "statischer" Information aus anderen zugänglichen Quellen, wie CRM-Daten ("Customer Relationship Management") oder Billing-Daten, zu komplexen und mit der Nutzung des Systems wachsenden zuschauerbezogenen Nutzungs- und Interessenprofilen verknüpft. Die Rohinformation wird in einem weiteren Schritt gewissermaßen veredelt ("Information Refinemement").

In einem ersten Schritt wird zunächst Sendungsinformation zu einzelnen Sendungen und zu "Formaten" automatisch gesammelt, wobei als "Format" ein wiederholt gesendetes Medienprodukt mit wechselndem Inhalt, beispielsweise eine Serie oder eine Show, bezeichnet wird. Die gesammelte Sendungsinformation wird dann ausgewertet und in einem der Sendung respektive dem Format zugeordneten Sendungs-Datensatz, dem "I-Set", zusammengefasst. Solche I-Sets sind Repräsentationen strukturierter/annotierter Informationen und wegen ihres spezifischen Inhaltes charakteristisch für die Sendung oder das Format. Dabei kann der Sendung oder dem Format eine größere Anzahl solcher I-Sets zugeordnet werden, wobei die Menge aller I-Sets für die Sendung oder das Format spezifisch ist und nachfolgend als "I-Set-Menge" bezeichnet wird.

Für das Sammeln der für die I-Sets vorgesehenen Sendungsinformation stehen verschiedene Quellen und Strategien zur Verfügung. Erfindungsgemäß kann die Sendungsinformation automatisch durch Analyse von Inhalten generiert werden. Zudem kann zusätzlich Sendungsinformation verwendet werden, die als Begleitinformation zu den Sendungen oder den Formaten ehedem vorhanden ist. Die Analyse kann an "Konserven" oder an Datenströmen ("Stream") vorgenommen werden. Erfindungsgemäß wird die Sendungsinformation mittels der Analysefunktion automatisch aus einem Sendebeitrag extrahiert, in ein vorgegebenes Format gebracht und in einem dem Sendebeitrag zugeordneten Sendungsdatensatz gespeichert. So können beispielsweise vom Konsumenten aktuell verfolgte Sendungen identifiziert werden, indem das gewählte Fernsehprogramm (beispielsweise ARD) und der Formattitel (beispielsweise "Sportschau") unmittelbar der über das Netz gesendeten Anfrage des Konsumenten entnommen wird.

Aus der elektronischen Begleitinformationen sind zunächst der Titel, die Namen einiger Protagonisten und eine zusammenfassende Beschreibung der Sendung enthalten. Die Begleitinformationen werden von den Format-Anbietem elektronisch als Text bereitgestellt und stehen beispielsweise als Videotext oder als Info über DVB-T respektive über DVB-S zur Verfügung. Die Begleitinformationen sind jedoch von unterschiedlicher inhaltlicher Qualität.

Die Information über die aktuell verfolgte Sendung erlaubt dem System die richtige Audio- und Videoquelle für die Analysen zu wählen. So für die Analyse von Audiosignalen folgende Möglichkeiten der Extraktion von Information bekannt: Über Sprachanalyse kann eine Identifikation von Darstellern oder von Synchronsprechern erfolgen. Auch die Erkennung von Hintergrundgeräuschen ist möglich. Diese Indizien können zur Kategorisierung des Fernsehprogramms genutzt werden, wobei Musiksendungen, Sportsendungen, Talkshows oder ähnliches als solche erkannt werden. Über weitere Funktionen der Spracherkennung können außerdem Inhalte von Sendungen identifiziert werden. Beispielsweise können aus Sportreportagen Vereinsnamen, Spielernamen und Sportstätten identifiziert werden. Aus Musiksendungen können auf diese Art die Namen von Interpreten und die Musiktitel extrahiert werden, wobei eine Musiktyperkennung die Unterschiede zwischen Klassik, Pop, Rock, Jazz u.s.w. identifizieren kann. Durch die Analysen werden nicht nur die fraglichen Informationen, die meist den Inhalt betreffen, gewonnen. Es können darüber hinaus auch Rückschlüsse auf das allgemeine Nutzerverhalten gezogen werden, was beispielsweise den Beliebtheitsgrad einer Sendung widerspiegelt.

Auch zur Analyse des Bildsignals von TV-Sendungen sind aus dem Stand der Technik Techniken bekannt. So ist die Erkennung von Darstellern anhand biometrischer Merkmale, beispielsweise der Gesichtszüge, möglich. Zudem können Szenen über den Hintergrund, wie Strand, Schnee oder Wald, erkannt werden, wobei ergänzende Analysen möglich sind. Um die Weiterverwendung zu erleichtern, ist es vorteilhaft, das Ergebnis der Analysen in Form von Text, beispielsweise im XML Format, zu notieren.

Extrahierte Informationen kann zwei verschiedene Arten aufweisen: Zum einen wird die Information von extrahierten Fakten gebildet. Solche als Text vorliegende Information sei nachfolgend "Informationselement" genannt. Diesen Fakten kann eine aus der Analyse gewonnene Anmerkung (nachfolgend "Annotation") zugeordnet sein, die aus verschiedenen Quellen bezogen werden kann. Die Annotationen können sich aus Interpretationen der Information ergeben. So können beispielsweise Formattyp, Drehort, Darsteller, usw. extrahiert werden. Das Informationselement kann zusammen mit den dazugehörigen Annotationen in einem I-Set zusammengefasst werden. Ein I-Set für das Format "Deutschland sucht den Superstar" wäre beispielsweise das nachfolgende:
Informationselement: "Dieter Bohlen"
Annotationen:
   Interpretation: Darsteller
   Quelle: Sprechererkennung
   Konfidenz: 80% (ziemlich sicher)
   Frequenz: 3 (selten)

Als Annotationen kann die "Konfidenz" aufgenommen werden, mit der die Sicherheit der durchgeführten Interpretation, charakterisiert wird. Die "Frequenz" gibt an, wie häufig eine Interpretation während einer Sendung stattgefunden hat. Hiermit ist ein Ranking von Interpretationen möglich, so dass bestimmte Merkmale als vorherrschend interpretiert werden können, z.B. Hauptdarsteller in Filmen, bestimmte Bildszenen oder Landschaftsszenen in Naturfilmen.

Im Lauf der Beobachtung eines Formats werden durch solche Analysen laufend neue I-Sets generiert oder vorhandene I-Sets modifiziert, validiert oder falsifiziert, was sich in einer Änderung der zugehörigen Konfidenz ausdrückt. Im Fall des oben genannten Beispieles würde ein aufgefundener Hinweis in der

Programminformation, wie "Deutschland sucht den Superstar mit Dieter Bohlen" den Textbestandteil "Dieter Bohlen" erkennen, so dass die Konfidenz für das Informationselement "Dieter Bohlen" und dessen Interpretation als Darsteller entsprechend erhöht würde. Daraus könnte sich beispielsweise ergeben:
Informationselement: "Dieter Bohlen"
Annotationen:
   Interpretation: Darsteller, Quelle:
   Quelle: Sprechererkennung
   Konfidenz: 90% (sehr sicher)
   Frequenz: 3 (selten)

### Schritt 2: "Information Refinement"

Da der erste Schritt des "raw information extraction" meist nur verhältnismäßig "flache" Informationen liefert, die weder zusammengefasst ("aggregiert") noch abstrahiert ist, erfolgt der weitere Schritt des "Information Refinement". Das Information Refinement sei zunächst durch ein Beispiel erklärt:

Die spracherkennende Funktion hat verschiedene Informationselemente aus erkannten Worten generiert. Im Verlauf eines Formats wurden beispielsweise die Wörter "Klose", "Werder", "Bundesliga", "Bremen" und "Meister" extrahiert und als nachfolgendes I-Set zusammengestellt:
Informationselement: "Klose"
Annotationen:
   Interpretation: Erkanntes Wort
   Quelle: Sprechererkennung
   Konfidenz: 90% (sehr sicher)
   Frequenz: 8 (häufig)

Jedes Wort für sich genommen lässt nur vage darauf schließen, dass es sich bei dem aktuellen Format um Sport, genauer um Fußball, noch genauer um Bundesliga und noch genauer um Werder Bremen handelt. Zusammengenommen jedoch lässt sich diese Information mit einiger Konfidenz durch eine Gesamtbetrachtung der Informationselemente extrahieren.

Diese abgeleitete Interpretation lässt sich auf direktem Wege nicht erschließen, insbesondere die elektronische Programmbeschreibung lässt nicht unbedingt darauf schließen, welche Bundesligaberichterstattung tatsächlich momentan gerade in der Sportschau stattfindet. Um das jedoch zu bewerkstelligen, sind verschiedene Technik bekannt, die Schlussfolgerungen nach dem oben genannten Muster erlauben. Beispielweise sind regelbasierende Systeme mit ihrem prinzipiellen Nachteil statischer und manuell zu erstellender Regelbasen bekannt. Außerdem sind lernende Systeme bekannt, die beispielsweise auf der Basis neuronaler Netzwerke funktionieren. Diese haben mitunter den Nachteil langer Trainingsphasen. Beispielhaft wird hier ein regelbasierendes System beschrieben:

Kern des zweiten Schritts des Information Refinement ist eine Regelbasis, die eine Sammlung von Regeln darstellt, die auf die Menge der aktuellen I-Sets Anwendung findet. Eine Regel sieht beispielsweise wie folgt aus:

### LHS → RHS

Dabei steht LHS für "Left Hand Side" und stellt die Bedingung dar, unter der die Aussage "RHS" zutrifft. Semantisch gilt: Wenn LHS wahr, dann folgt daraus RHS RHS selbst wiederum eine Aussage in Form eines I-Set ist. Konkret:

Wenn im I-Set das Informationselement "Klose" und die Quelle "Spracherkennung" ist, dann soll ein neues I-Set wie folgt generiert werden, sofern noch keines existiert:
Informationselement: "Klose"
Annotationen:
   Interpretation: Spieler bei Werder Bremen
   Quelle: Regel
   Konfidenz: (abgeleitet bei Regelanwendung)
   Frequenz: (abgeleitet bei Regelanwendung)
   Time-Stamp-Creation: 29-10-2007 23:12
   Time-Stamp-Last-Update: 19-11-2007 12:27

Folgende aus dem Stand der Technik bekannte Optimierungen lassen sich dabei berücksichtigen: Metaregeln, welche die Reihenfolge der Anwendung von Regeln steuern; die Anwendung von Kategorien oder Sammelbegriffen. So könnte im obigen Beispiel ein Kategorie "Spieler bei Werder Bremen" Anwendung finden. "Spieler bei Werder Bremen" würde dann in nachfolgender Regel stellvertretend für alle Werder-Spieler sein. Andere Beispiele für Kategorien sind "Sportkontext" für alle Sportarten oder "Bundesliga" enthaltend alle Namen der Bundesligavereine, der Stadien, der Spieler.

Weiterer Bestandteil des zweiten Schrittes in der Anwendung von Regeln kann die Ableitung der Konfidenz und der Frequenz sein, wobei zu unterscheiden ist, ob das I-Set existiert oder noch nicht existiert: Bei nicht existierendem I-Set leitet sich Konfidenz und Frequenz aus den zugrundeliegenden Fakten der LHS der Regel ab. Bei existierendem I-Set wird Konfidenz und Frequenz des existierenden I-Sets auf Basis der zugrundeliegenden Fakten der LHS der Regel angepasst. Durch sukzessive Anwendung der Regeln wird das Wissen über das aktuell laufende TV-Format kontinuierlich aggregiert und abstrahiert. Durch die Verwendung von Konfidenz und Frequenzinformationen kann einem Informationselement eine "Bedeutung" beigemessen werden, die im weiteren für die Auswahl und Priorisierung verwendet wird.

### Schritt 3: " Filterung der I-Sets"

In diesem Schritt werden die I-Sets, die sich aus Schritt 2 ergeben haben, gefiltert, so dass nur die maßgebenden I-Sets übrig bleiben. Für die Filterung können wiederum die Kriterien Frequenz und Konfidenz aber auch andere herangezogen werden. Die übrig gebliebenen I-Sets werden in die User I-Sets Menge eingepflegt. Dieses Einpflegen kann analog zum obigen Vorgehen mittels einer Regelbasis erfolgen. Falls I-Sets bereits existieren, kann die Behandlung wie oben dargestellt erfolgen.

Schritt 3 kann während des laufenden Programms oder im Nachhinein erfolgen. Entscheidend für die Anwendung von Schritt 3 ist das Nutzerverhalten. Wenn der Nutzer das Programm hinreichend lange geschaut hat, kann davon ausgegangen werden, dass er sich für die dargestellten Inhalte interessiert.

### Schritt 4: "Erzeugung von Nutzer I-Sets"

In Schritt 4 werden aus externen Quellen nutzerspezifischer Information die nutzerspezifischen I-Sets erstellt. Externe Quellen können Kundendatenbanken, Nutzungs- und Verbindungsdaten, CRM-Systeme, Schufa-Daten oder Rechnungsdaten sein. Die Analyse von Nutzerinformationen und dessen Konsumverhalten liefert beispielsweise Informationen zu Alter, Geschlecht oder Wohnort, zu bevorzugten Programmen, zu in der Vergangenheit in Anspruch genommene Mehrwertdiensten, zur Zugehörigkeit zu bestimmten sozialen Gruppen und Schichten und zur Zahlungsfähigkeit. Prinzipiell ist das Vorgehen ähnlich, wie zu Schritt 1 beschrieben. Die Anwendung kreiert I-Sets auf Basis der oben beispielhaft aufgeführten nutzerbezogenen Daten. Beispiele für I-Sets als Ergebnisse von Schritt 4 wären:
Informationselement: Pay TV Nutzer
Annotationen:
   Interpretation: Heavy User
   Quelle: CRM-Daten Analyse
   Konfidenz: hoch
   Frequenz: hoch
   Time-Stamp-Creation: 29-10-2007 23:12
   Time-Stamp-Last-Update: 19-11-2007 12:27
   oder
Informationselement: Internet Literate
Annotationen:
   Interpretation: Yes
   Quelle: CRM-Daten Analyse
   Konfidenz: hoch
   Frequenz: hoch
   Time-Stamp-Creation: 29-10-2007 23:12
   Time-Stamp-Last-Update: 19-11-2007 12:27
Informationselement: High End Customer
Annotationen:
   Interpretation: Yes
   Quelle: Schufa-Daten Analyse
   Konfidenz: hoch
   Frequenz: hoch
   Time-Stamp-Creation: 29-10-2007 23:12
   Time-Stamp-Last-Update: 19-11-2007 12:27

Die so generierten Nutzer I-Sets ergänzen die in Schritt 3 generierten Sendungs-I-Sets und werden entsprechend in die User-I-Set-Menge eingepflegt, wobei die Steuerung des Einpflegeprozesses durch eine Regelbasis erfolgen kann. Eine Besonderheit gilt dem Update bereits existierender I-Sets. Hier kann die Ersetzung derselben stattfinden, sofern sich neue Sachverhalte aus beispielsweise CRM-Daten ergeben, z.B. kann sich ein
Informationselement: Internet Literate
Annotationen:
   Interpretation: No
   Quelle: CRM-Daten Analyse
   Konfidenz: hoch
   Frequenz: hoch
   Time-Stamp-Creation: 29-10-2007 23:12
   Time-Stamp-Last-Update: 19-11-2007 12:27
ändern in:
Informationselement: Internet Literate
Annotationen:
   Interpretation: Yes
   Quelle: CRM-Daten Analyse
   Konfidenz: hoch
   Frequenz: hoch
   Time-Stamp-Creation: 29-10-2007 23:12
   Time-Stamp-Last-Update: 21-12-2007 17:33

Es ist vorteilhaft, auch in diesem Fall ein entsprechendes Verfahren, wie in Schritt 2 dargestellt, anzuwenden, um I-Sets weiter zu aggregieren und abstrahieren. Mit Schritt 4 ist der analytische Teil, nämlich die Extraktion, Aggregation und Abstraktion der Information abgeschlossen. Zwecks Konsistenthaltung dieser so erstellten I-Set Mengen lassen sich Mechanismen nach dem Stand der Technik nutzen, wie beispielsweise Assumption Truth Maintenance (ATM) Systeme.

### Schritt 5: "Content Auswahl"

Mit Schritt 5 beginnt der synthetische Teil des erfindungsgemäßen Verfahrens, nämlich die Auswahl, Priorisierung und Kategorisierung kontextueller Inhalte und Dienste. Schritt 5 beginnt mit dem Auswahl Prozess. Dabei dienen die Sendungs I-Set-Menge sowie die User I-Set-Menge als Kriterien zur Auswahl kontextueller Inhalte und Dienste. Die Gesamtheit anbietbarer Inhalte und Dienste wird zweckmäßig ebenfalls in Form von I-Sets ausgedrückt und in der Content-I-Set-Menge vorgehalten. Die darin vorgehaltenen I-Sets sind annotiert. Einige wichtigste Annotationen sind:
- Referenz zum Service oder Inhalt. Diese dient dazu, den Service zu identifizieren und beispielsweise über eine URL aufzurufen
- Beschreibung des Service oder Inhalt
- Kategorie, beispielsweise Werbung, Merchandising, Shopping, PayTV, Web-Formate, Mehrwertdienste
- Nutzungsbedingungen, beispielsweise 18 Jahre
- Spezifikation der Laufzeitumgebung, damit der Service genutzt werden kann, beispielsweise Mobiltelefon(-typ), Settopbox(-typ), notwendige Bandbreite, Display
- Rückkanal-Spezifikation. Das dient dazu, angrenzende Systeme zu identifizieren und zu benachrichtigen falls der Nutzer dieses I-Set auswählt
- Übereinstimmungs Kriterien, insbesondere Keywords, nach denen der Service oder der Inhalte ausgewählt werden soll. So könnte für die Webinhalte/Merchandising/PayTV-Übertragung von Werder Bremen als Übereinstimmungs Kriterium "Werder Bremen" festgelegt werden.

Der Auswahl Prozess besteht darin, das Angebot, beschrieben durch die Content-I-Set-Menge mit den durch die User-I-Set-Menge abgebildeten Grund-Interessen und dem aktuellen Interesse des Nutzers, abgebildet durch die Current-I-Set-Menge zu untersuchen und die best passendsten Angebote auszuwählen und dem Schritt 6 zur weiteren Bearbeitung weiterzureichen. Dieser Auswahlprozess kann wiederum regelbasiert oder aber auch über eine Datenbankabfragesprachen erfolgen.

Die Regel entsprechend den oben dargestellten Ausführungsbeispielen sind Teil einer Regelbasis. Nach Abschluss des Auswahlprozesses wird die Ergebnismenge ("Result-I-Set-Menge") an den nächsten Schritt 6 übergeben. Zweckmäßigerweise wird die Result-I-Set-Menge periodisch neu erstellt bzw. veraltete Inhalte gelöscht und aktuelle ergänzt. Auch hier lassen sich ATM-Systeme nutzen.

### Schritt 6: "Content Kategorisierung und Priorisierung"

Auf Basis einer vorgegebenen Kategorisierung werden die I-Sets der Result-I-Set-Menge sortiert. Die Kategorisierung erfolgt anhand des in Schritt 5 beschriebenen Kategorisierungsmerkmal der I-Sets. Es ergibt sich somit ein Baum oder eine kategorisierte Liste der Art, "Nutzer: Werder Bremen interessierte, männliche, gutverdienende Person".
Kategorisierungsmerkmal 1 "Werbung" → I-Set A (z.B. Sportartikel-Werbung) I-Set B (z.B. Becks Bier Werbung)
Kategorisierungsmerkmal 2 "TV-Programme" → I-Set C (z.B. Werder-Bayern Spiel Übertragung etc)
Kategorisierungsmerkmal 3 "PayTV-Programme" → I-Set D (z.B. Champions League Spiel Werder-Barcelona)
Kategorisierungsmerkmal 4 "Merchandising" → I-Set E (z.B. Werder Fanartikel, Fanreisen, Ticketshop, ...)
Kategorisierungsmerkmal 5 "Onlinedienste" → I-Set F (z.B. Werder Chat)
Kategorisierungsmerkmal 6 "Background-Info" → I-Set G (z.B. Werder Homepage)

Innerhalb jeder Kategorie erfolgt eine Priorisierung/Sortierung auf Basis der in den I-Sets abgebildeten (siehe Schritt 5) Kriterien (zugrundeliegende Quellen für Auswahl, i.e. Current bzw. User-I-Set, Time-Stamp, Relevanz,...).

Es ist denkbar, daß die zugrundeliegende Kategorisierung selbst konfigurierbar ist (automatisch, durch den Nutzer, durch den Systembetreiber).

Dieser Ergebnis-Baum wird dem Schritt 7 übergeben. Zweckmäßigerweise wird er periodisch neu erstellt und veraltete Inhalte gelöscht beziehungsweise aktuelle ergänzt.. Auch dabei lassen sich ATM-Systeme nutzen.

Schritt 7 - Content Presentation.

In Schritt 7 werden die Inhalte des Ergebnis-Baums dem Nutzer auf Basis der Möglichkeiten des von ihm genutzten Endgeräts zur Ansicht und Auswahl dargestellt. Diese Darstellung kann textuelle aber auch bildliche Inhalte enthalten. Dazu ist es erforderlich, dass der Endgerätetyp des Nutzers erkannt wird und vom darzustellenden I-Set unterstützt wird. Nicht das Endgerät unterstützende I-Sets werden gelöscht.

Die Anzeige selbst kann per Videotext, per WAP -/Java- Anwendung auf dem Handy, als Internet/Web-Anwendung auf dem PC, als MHP-Anwendung in der

Set-Top-Box o.a. erfolgen.

Erfolgt durch den Nutzer eine Auswahl eines I-Sets, so wird dies dem im I-Set spezifizierte System (Rückkanal) unter Angabe von mindestens der

Nutzeridentifikation signalisiert.

Nachfolgend wird die Erfindung anhand der Figuren 1 bis 4 näher erläutert. Es zeigen:
- **Figur 1**: ein Schaubild zur Verdeutlichung der Schritte 1 bis 3,
- **Figur 2**: ein Schaubild zur Verdeutlichung von Schritt 4,
- **Figur 3**: ein Schaubild zur Verdeutlichung von Schritt 5 und
- **Figur 4**: ein Schaubild zur Verdeutlichung der Schritte 6 und 7.

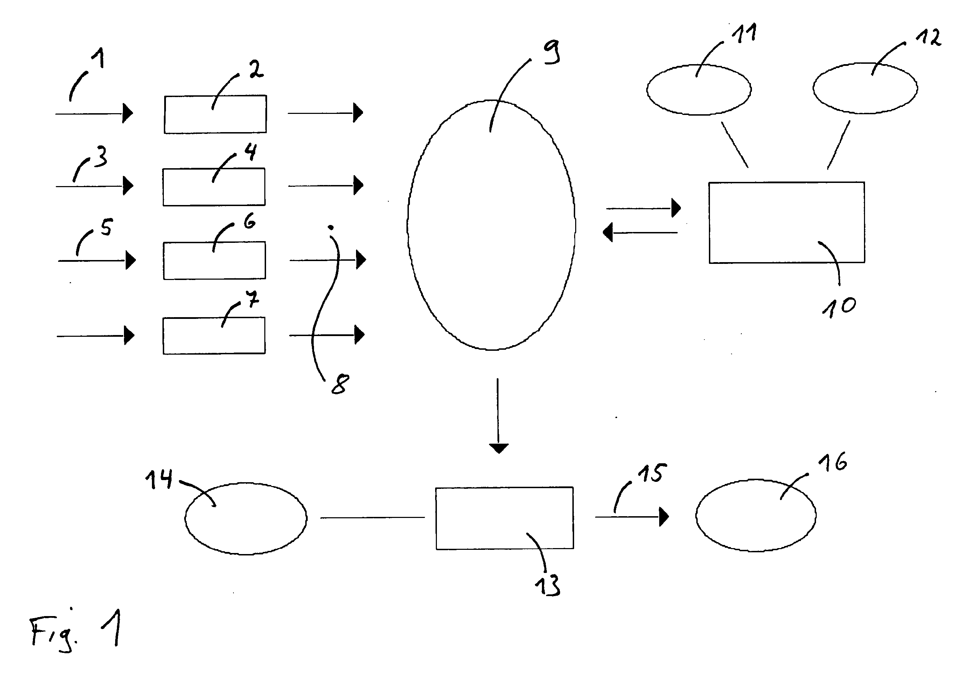

In Figur 1 sind die Quellen für Information dargestellt. Mit 1 ist die als Text vorliegende Programminformation bezeichnet, die durch ein Mittel zur Programminformation Analyse 2 abgerufen wird. Ein Audio-Stream 3 wird einer Funktion zur Audio-Analyse 4 und ein Video-Stream 5 einer Funktion zur Video-Analyse 6 zugeführt. Mit 7 sind beliebige weitere Mittel zur Informationsextraktion bezeichnet. Aus den Analysen werden "rohe" I-Sets generiert, die über den Weg 8 dem Speicher 9 für "rohe" I-Sets zugeführt werden. Der Speicher 9 bildet die Menge der zunächst "rohen" I-Sets ab.

Die Menge der zunächst "rohen" I-Sets unterliegt ständig der Bearbeitung durch die Funktion des "Information Refinement" 10, die aufgrund von Regeln 11 und Ontologien 12 bearbeitet werden. Entsprechend findet zwischen dem Speicher 9 und der Funktion 10 ein bidirektionaler Datenaustausch statt. Die aufbereiteten I-Sets werden einem Filter 13 zugeführt, der die Information aufgrund von Filterregeln 14 bearbeitet. Wenn die in den I-Sets vorhandene Information als wichtig erscheint, wird sie über den Weg 15 der Menge der "aktuellen" I-Sets 16 zugeführt.

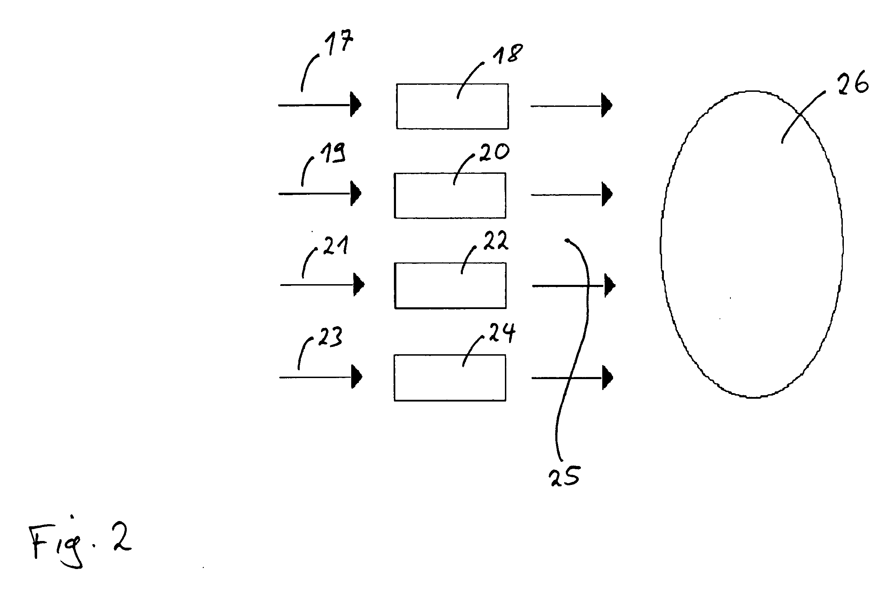

In Figur 2 ist die Erstellung der Nutzer I-Sets schematisch dargestellt. Dabei werden jedem über seine IP Adresse identifizierbaren Nutzer ein individuelles I-Set zugeordnet, dessen Inhalt auf unterschiedlichen Quellen beruht. Gezeigt ist hier die Quelle der CRM-Datensätze ("Customer Relationship Management") 17, die über eine entsprechende Analysefunktion 18 abgerufen und aufbereitet werden. Das Gleiche gilt für die Schufa-Einträge 19 und die Analysefunktion 20, sowie Datensätze enthaltend Billing- und/oder Verbindungsdaten 21, die von der Analysefunktion 22 aufbereitet werden. Auch in diesem Fall sind andere Datenquellen 23 und entsprechende Analysefunktionen 24 denkbar. Die mittels der Analysefunktionen gewonnen Daten werden als insbesondere mit einer zeitlichen Markierung versehene I-Sets über den Weg 25 der Menge der Nutzer-I-Sets 26 zugeführt.

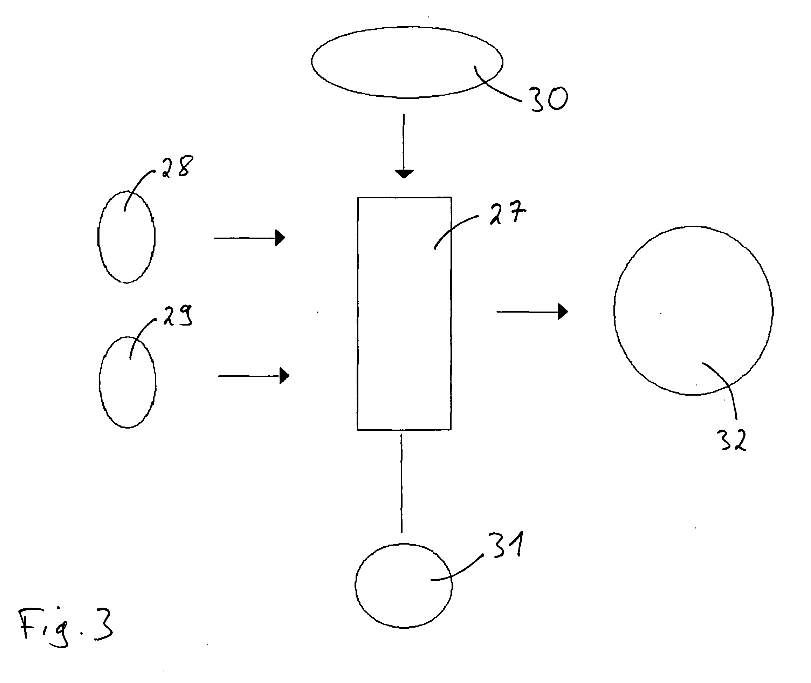

In Figur 3 ist die Systematik der Generierung der dem Nutzer zu präsentierenden Information dargestellt. Eine zentrale "Matching"- Funktion 27 erhält die Inhalte aus den aktuellen Sendungs I-Sets 28 und den Nutzer I-Sets 29. Sie hat ebenfalls Zugriff auf eine Datenbank 30 mit "Inhalts I-Sets", die über Information zu Content Quellen verfügt. Die "Matching"- Funktion 27 arbeitet auf der Grundlage bestimmter Regeln 31, mit denen sie aus den Content I-Sets 30 die geeigneten auswählt. Letztendlich werden die ausgewählten Content I-Sets als resultierende I-Sets 32 zur Verfügung gestellt.

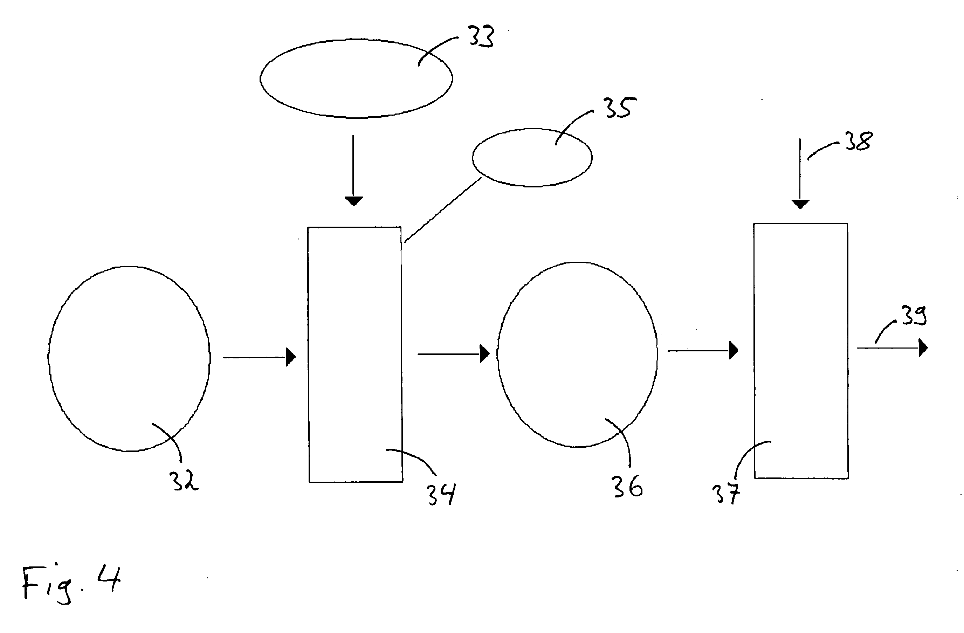

Nach Figur 4 werden die resultierenden I-Sets 32 in den im Datenbestand 33 abgespeicherten Kategorien zugeordnet und innerhalb der Kategorien priorisiert. Die Kategorisierung und Priorisierung übernimmt die Funktion 34, die auf der Grundlage der Regeln 35 arbeitet. Die sich so ergebende Ergebnismenge 36 bildet einen Baum mit Kategorien als Zweigen und I-Sets als Blättern in jeweils priorisierender Reihenfolge. Der Ergebnis-Baum wird im letzten Verarbeitungsschritt 37 noch nach den auf dem Endgerät des Nutzers nicht darstellbaren Inhalten durchsucht, die dann entfernt werden. Informationen bezüglich des Endgerätes ist dem Netzbetreiber bekannt oder fließt von Außen 38 beispielweise über die Identifizierung des Endgerätes zu. Die Ergebnisse werden dem System letztendlich zur Darstellung über den Weg 39 übergeben.

## Patentansprüche

1. Verfahren zum automatischen Aufbau und zur Pflege eines Datenbestandes umfassend einerseits Sendungsdatensätze, die Sendungsinformation zu jeweils einem über ein Datenleitungsnetz, insbesondere das Internet, zu übermittelnden Sendebeitrag enthalten, und umfassend andererseits Konsumentendatensätze, die Konsumenteninformation betreffend jeweils einem über das Datenleitungsnetz erreichbaren Konsumenten enthalten,
**dadurch gekennzeichnet,**
**dass** Sendungsinformation mittels mindestens einer Analysefunktion aus einem Sendebeitrag automatisch extrahiert, in ein vorgegebenes Format gebracht und in einem dem Sendebeitrag zugeordneten Sendungsdatensatz gespeichert wird, und
**dass** ein Konsument identifiziert und die ihm zuzuordnende Konsumenteninformation aus mindestens den medialen Inhalten, die er in der Vergangenheit konsumiert hat, erstellt wird.

2. Verfahren nach Anspruch 1,
**dadurch gekennzeichnet,**
**dass** die Sendungsinformation und/oder die Konsumenteninformation um spezifische Sekundärinformationen ergänzt wird.

3. Verfahren nach Anspruch 1 oder 2,
**dadurch gekennzeichnet,**
**dass** der Konsument anhand seiner zumindest temporären Netz-Adresse identifiziert wird, wobei aus den Parametern einer bestehenden Verbindung zwischen der Netz-Adresse des Konsumenten und der Netz-Adresse eines Senders automatisch Nutzerinformation extrahiert und in einem dem Konsumenten zugeordneten Konsumentendatensatz gespeichert wird.

4. Verfahren nach einem der vorherigen Ansprüche,
**dadurch gekennzeichnet,**
**dass** auf Basis der automatisch generierten Sendungsdatensätzen und der Konsumentendatensätze nutzerspezifische Medieninhalte identifiziert und dem Nutzer dargeboten werden.

5. Verfahren nach Anspruch 4,
**dadurch gekennzeichnet,**
**dass** die Identifikation durch automatischen Vergleich von Sendungsdatensätzen und der Konsumentendatensätze durchgeführt wird, wobei ein Übereinstimmungsgrad definiert wird, wobei bei Erreichen des Übereinstimmungsgrades dem Konsumenten der entsprechende Sendungsdatensatz zur Darbietung übermittelt wird.

6. Verfahren nach einem der vorherigen Ansprüche,
**dadurch gekennzeichnet,**
**dass** Sendungsinformation mittels einer Tonanalysefunktion und/oder einer Bildanalysefunktion und/oder einer Sprachanalysefunktion und/oder einer Sprechererkennung und/oder einer Spracherkennung und/oder einer Musiktitelerkennung und/oder einer Bildszenenanalyse extrahiert wird.

7. Verfahren nach einem der vorherigen Ansprüche,
**dadurch gekennzeichnet,**
**dass** sendungsspezifische Sekundärinformation aus in Textform vorliegender Programminformationen, insbesondere aus Videotext oder über das Internet erhältliche Begleitinformation, extrahiert wird.

8. Verfahren nach einem der vorherigen Ansprüche,
**dadurch gekennzeichnet,**
**dass** die Sendungsdatensätze und/oder die Konsumentendatensätze ständig durch Sammeln neuer Information ergänzt werden.

9. Verfahren nach einem der vorherigen Ansprüche,
**dadurch gekennzeichnet,**
**dass** für die Konsumentendatensätze benötigte Sekundärinformation aus zugänglichen Datenbanken, wie Telefonbüchern oder dem Internet, gewonnen wird.

10. Verfahren zur Generierung weiterführender Information auf der Grundlage von Sendungsdatensätzen und Konsumentendatensätzen, die insbesondere nach dem Verfahren nach einem der vorherigen Ansprüche generiert wurde, wobei die weiterführender Information dem Konsumenten einer Sendung präsentiert wird,
**dadurch gekennzeichnet,**
**dass** auf Basis vorhandener Sendungsdatensätze und Konsumentendatensätze nutzerspezifische Medieninhalte durch automatischen Vergleich identifiziert und dem Konsumenten dargeboten werden.

11. Verfahren nach Anspruch 10,
**dadurch gekennzeichnet,**
**dass** für den automatischen Vergleich ein Übereinstimmungsgrad definiert wird, wobei ein Erreichen des Übereinstimmungsgrades als Identifikation gewertet wird.
